# EUROPEAN PATENT APPLICATION

(11) **EP 4 815 346 A1**
(43) Date of publication of application: **30.09.2026**
(21) Application number: 26166280.3
(22) Date of filing: 20.03.2026
(51) Int. Cl.: H04H 20/95, G01S 19/07

(54) **METHOD AND APPARATUS FOR OPTIMIZING TRANSMISSION IN BROADCAST NETWORK BASED ON INTEGRATION OF RTCM MESSAGES FOR EACH REFERENCE STATION AND INCLUSION OF PACKET LENGTH INFORMATION**

(30) Priority: 24.03.2025 KR 20250037527; 11.03.2026 KR 20260043798
(71) Applicant: HYUNDAI MOBIS CO., LTD., Seoul 06141 (KR); Jung, Soo A, Seoul 07002 (KR); Korean Broadcasting System, Seoul 07235 (KR)
(72) Inventor: LEE, Yong Joon, 16891 Yongin-si, Gyeonggi-do (KR); SUH, Young Woo, 16891 Yongin-si, Gyeonggi-do (KR); JUNG, Soo A, 16891 Yongin-si, Gyeonggi-do (KR)
(74) Representative: Jung, Minkyu

(57) **Abstract**

The present disclosure provides a method for transmitting, by a broadcast server, Radio Technical Commission for Maritime Services (RTCM) messages corresponding to a plurality of reference stations to a rover user equipment (UE) through a broadcast network. The method includes: collecting a plurality of RTCM messages for each reference station and generating a single container message based on the plurality of RTCM messages; configuring a station identifier (ID) bit region and a reserved bit region in at least one RTCM message included in the single container message as a reference station number for identifying the reference station; and adding a group cyclic redundancy check (CRC) calculated over all messages included in the container message at an end of the at least one RTCM message.

## Description

This application claims the benefit of Korean Patent Application Nos. 10-2025-0037527, filed on March 24, 2025 and 10-2026-0043798, filed on March 11, 2026, which is hereby incorporated by reference as if fully set forth herein.

### BACKGROUND

### Technical Field

The embodiments relate to a method and apparatus for optimizing transmission in a broadcast network based on integration of Radio Technical Commission for Maritime Services (RTCM) messages per reference station and inclusion of packet length information.

### Discussion of the Related Art

Radio Technical Commission for Maritime Services (RTCM) messages are standardized message formats for transmitting satellite position correction information and are widely used in Global Navigation Satellite System (GNSS)-based positioning and navigation systems. In the RTCM standard, unique message numbers such as 1001 and 1002 are assigned to each message type in order to efficiently deliver various types of correction information, including satellite observation information, code and carrier phase observation values, coordinates of a base station (BS), and antenna information. A receiving user equipment (UE) interprets the messages to perform precise position correction.

Among the RTCM messages, messages 1005 and 1006 are representative message types that include coordinate information of a reference station. Message 1005/1006 includes three-dimensional position information of a GNSS reference station, position information of an antenna of the reference station, and related parameters. Through the information, a data receiver may recognize precise reference coordinates of the reference station. Since a mobile UE or a user receiver performs relative position correction for a position thereof based on accurate coordinates of the reference station, message 1005/1006 plays a key role in implementing high-precision positioning (e.g., Real-Time Kinematic (RTK) positioning and network RTK positioning).

In particular, in a service environment in which GNSS correction information is provided in real time to a plurality of receiving UEs through a broadcast network or a communication network, efficient integration and transmission of various RTCM messages generated on a per-reference-station basis may be important. In such an environment, message 1005/1006 including coordinate information of a reference station is transmitted together with other observation information messages (e.g., 1001, 1002, etc.). Accordingly, a demand for technology for optimizing a configuration, an integration scheme, and a packet structure of RTCM messages in order to achieve efficient utilization of network resources and minimize transmission delay is increasing.

### SUMMARY

Accordingly, the present disclosure is directed to a method and apparatus for optimizing transmission in a broadcast network based on integration of Radio Technical Commission for Maritime Services (RTCM) messages for each reference station and inclusion of packet length information that substantially obviate one or more problems due to limitations and disadvantages of the related art.

Conventional RTCM-based correction information transmission methods have the following problems.

Since RTCM messages have a structure in which messages are individually generated and transmitted for each message type, a plurality of RTCM messages generated from the same reference station (e.g., 1005/1006 reference station coordinate information, observation information messages, other correction messages, etc.) are transmitted in a dispersed and fragmented manner over a broadcast network. As a result, there are problems in that (i) correction information is difficult to collectively receive and process on a per-reference-station basis, and (ii) a receiving UE has difficulty clearly recognizing boundaries of a message group corresponding to the same reference station. In addition, since a broadcast network (e.g., terrestrial broadcasting, multicast/broadcast transmission network, etc.) has limitations in packet size, transmission period, channel capacity, and the like, a method of transmitting RTCM messages for each reference station as separate packets may reduce network resource utilization efficiency due to increased header overhead, unnecessary transmission of empty padding, waste of transmission slots, and the like.

In the related art, integrated structural information on a per-reference-station basis and packet length information are often not explicitly provided for RTCM data transmitted on a packet basis. Accordingly, it may be difficult for a receiving UE to efficiently determine (i) which section within a packet corresponds to which reference station, (ii) a data length corresponding to each reference station, and (iii) a point from which recovery and resynchronization should be performed when a packet boundary is corrupted. As a result, retransmission burden may increase when data loss occurs, and receiver complexity may increase in an environment in which data from a plurality of reference stations are simultaneously received. In addition, it may be difficult to perform an optimized transmission design suitable for broadcast network characteristics (one-way communication and fixed bandwidth).

Accordingly, an objective of the embodiments is to provide a method and apparatus for optimizing transmission in a broadcast network, the method and apparatus being capable of integrating and reconstructing a structure of RTCM messages on a per-reference-station basis and including packet length information for each data block corresponding to a reference station, thereby enabling a receiving UE to efficiently distinguish and recover RTCM data transmitted over a broadcast network on a per-reference-station basis and maximizing transmission efficiency in accordance with packet structure and bandwidth characteristics of the broadcast network.

Additional advantages, objects, and features of the disclosure will be set forth in part in the description which follows and in part will become apparent to those having ordinary skill in the art upon examination of the following or may be learned from practice of the disclosure. The objectives and other advantages of the disclosure may be realized and attained by the structure particularly pointed out in the written description and claims hereof as well as the appended drawings.

The embodiments address the above-described problems by reconfiguring fields of RTCM message 1005/1006 and introducing a reference-station-based group message (G-message) structure, thereby facilitating integration and transmission of data for each reference station and identification of packet boundaries. According to this configuration, transmission efficiency of RTCM-based correction information in a broadcast network environment may be improved, and processing burden of a receiving UE may be reduced.

In an embodiment according to the present disclosure, a header structure of RTCM message 1005/1006 is modified. In this embodiment, a Station ID field used for identifying a reference station in the related art is used as a length information field indicating a total number of bytes of RTCM data configured for the reference station. In addition, 10 bits previously reserved are redefined as a field indicating a reference station number. The reconfigured length information and reference station number are designed such that a bit configuration may be flexibly adjusted within a total of 22 bits, thereby enabling efficient allocation of bit resources according to a service environment or the number of reference stations. Accordingly, the receiving UE may clearly recognize an end position of a data block corresponding to the reference station based on the length information of message 1005/1006 received and may classify and manage data for each reference station based on the reference station number field.

Next, in the embodiment, a reference-station-based G-message structure is introduced. In the related art, RTCM messages corresponding to multiple reference stations are transmitted in an intermingled manner over a broadcast network, and consequently, all messages corresponding to a specific reference station are not received at a single time. In contrast, in the embodiment, all RTCM messages corresponding to a single reference station are grouped together and transmitted as a complete data set on a per-reference-station basis. More specifically, message 1005/1006 of the corresponding reference station (reference station coordinate information) is used as a base message, and other RTCM messages belonging to the same reference station (e.g., observation information and other correction messages) are sequentially concatenated thereafter to form a single G-message. Accordingly, a receiver may acquire all message data required for a specific reference station through a single reception, thereby reducing reference station activation time and shortening time required for a rover to correct a position of the rover.

According to the embodiment, a cyclic redundancy check (CRC) structure is improved to provide a group-level error detection function while maintaining compatibility with an existing RTCM standard. First, for message 1005/1006, a message-level CRC is generated and inserted in the same manner as in the related art, thereby maintaining compatibility with existing RTCM receivers. Thereafter, for other RTCM messages belonging to the same reference station, individual CRCs included in respective messages may be removed, and only payload portions are sequentially concatenated after message 1005/1006 to form a G-message. A new 24-bit group CRC is calculated for the entire combined data (i.e., message 1005/1006 and payloads of the other RTCM messages) and appended at an end of the G-message, thereby enabling the receiving UE to collectively detect errors in an entire data block for each reference station.

Furthermore, the embodiment may further include an optional group termination field (16 bits) as a means for clearly indicating termination of a G-message. According to an embodiment, the group termination field is set to values 0x40 and 0x40 and is used as an end marker for clearly identifying termination of the G-message at a receiver. Insertion of the group termination field may be selectively determined according to a service environment and a packet design policy. When inserted, the receiving UE may quickly and reliably recognize an end point of an entire packet and may easily identify a resynchronization point even in the event of packet corruption.

In summary, according to the embodiments, (1) Station ID and Reserved fields of message 1005/1006 are redesigned as length information and a reference station number field, (2) a G-message structure obtained by integrating RTCM messages for each reference station is defined, and (3) an error detection and packet boundary identification scheme combining individual message CRCs, a group CRC, and an optional group termination field is introduced. Through this configuration, the embodiment provide a positioning system and a method and apparatus for optimizing transmission in a broadcast network, thereby simultaneously achieving efficient integrated transmission of RTCM data for each reference station, clear identification of message termination points, reduction of reference station activation time, and reduction of rover position correction time in a broadcast network environment.

The embodiment include a method for transmitting, by a broadcast server, RTCM messages corresponding to a plurality of reference stations to a rover UE through a broadcast network. The method includes: collecting a plurality of RTCM messages for each reference station and generating a single container message based on the plurality of RTCM messages; configuring a station ID bit region and a reserved bit region in at least one RTCM message included in the single container message as a reference station number for identifying the reference station; and adding a group CRC calculated over all messages included in the container message at an end of the at least one RTCM message.

It is to be understood that both the foregoing general description and the following detailed description of the present disclosure are exemplary and explanatory and are intended to provide further explanation of the disclosure as claimed.

As is apparent from the above description, the present disclosure has effects as follows.

According to the embodiments, data transmission efficiency may be significantly improved. By integrating a plurality of RTCM messages into a single container for each reference station and reconstructing cyclic redundancy check (CRC) information redundantly included in each message on a group basis, identical correction information may be transmitted using a smaller number of transmission bits. Accordingly, required bandwidth in a broadcast network or a communication network may be reduced, and more reference station information may be transmitted using identical resources, thereby improving overall transmission efficiency of the system.

In addition, data transmission optimized for a broadcast network may be achieved. In the embodiments, since a total number of bytes of RTCM data for each reference station is explicitly included, a receiving UE may easily identify an end position of a data block corresponding to a specific reference station within a received data stream. This facilitates packet boundary recognition and resynchronization in an environment using one-way transmission and a fixed packet structure, such as a broadcast network, and consequently improves stability and reliability of data reception.

Additionally, the embodiments may reduce a position correction time. By configuring all necessary RTCM messages for each reference station to be collectively transmitted in a form of a single group message, a receiver (e.g., a UE operating as a rover) may receive not only message 1005/1006 for the corresponding reference station but also observation information and other correction messages at once. Accordingly, an activation time until the reference station operates effectively may be reduced, and a time required for the rover to precisely correct a position of the rover may also be shortened, thereby improving overall initial convergence time and service responsiveness of the system.

Lastly, the embodiments may offer scalability while maintaining compatibility with an existing RTCM system. The embodiments are designed to maintain a basic message structure and a CRC generation scheme of RTCM (particularly processing related to message 1005/1006) while additionally including a length information field suitable for broadcast network characteristics, a reference station number field, a group CRC, and a termination bit. Accordingly, interoperability with equipment and systems based on an existing RTCM standard may be preserved, and a transmission structure capable of being flexibly extended for various broadcast network environments and multi-reference-station service environments in the future may be provided.

It will be apparent to those skilled in the art that various modifications and variations can be made in the present disclosure without departing from the spirit and scope of the disclosure. Thus, it is intended that the present disclosure cover the modifications and variations of this disclosure provided they come within the scope of the appended claims and their equivalents.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 illustrates a field configuration of message 1006 defined in a Radio Technical Commission for Maritime Services (RTCM) standard in accordance with the embodiments;
FIG. 2 illustrates a basic structure of a Radio Technical Commission for Maritime Services (RTCM) group payload in accordance with the embodiments;
FIG. 3 is a diagram schematically illustrating a basic structure of an RTCM message in accordance with the embodiments;
FIG. 4 schematically illustrates a range in which a cyclic redundancy check (CRC) is calculated in a basic RTCM message structure in accordance with the embodiments;
FIG. 5 schematically illustrates a message transmission structure for transmitting an RTCM message from a broadcast server in accordance with the embodiments.
FIG. 6 illustrates a concept of an improved RTCM message transmission structure in a broadcast server in accordance with the embodiments;
FIG. 7 is a flowchart illustrating a method for optimizing transmission in a broadcast network based on integration of RTCM messages for each reference station and inclusion of packet length information in accordance with the embodiments;
FIG. 8 illustrates a configuration of a Message Payload region in a basic RTCM message structure in accordance with the embodiments;
FIG. 9 illustrates a payload structure of messages 1006/1005 among basic RTCM messages in accordance with the embodiments;
FIG. 10 is a diagram illustrating a structure of an improved RTCM group message, that is, a configuration of a group message payload using message 1006/1005, in accordance with the embodiments;
FIG. 11 illustrates an example of a group CRC and a format of message 1006 in an improved RTCM group message structure according to the embodiments;
FIG. 12 illustrates a transmission sequence of an RTCM message according to an improved method in accordance with the embodiments; and
FIG. 13 illustrates an example of a reference station arrangement in accordance with the embodiments.

### DETAILED DESCRIPTION

Preferred embodiments will be described in detail below, and examples thereof are illustrated in the accompanying drawings. The following detailed description with reference to the accompanying drawings is provided to describe preferred embodiments and is not intended to limit the embodiments to specific forms that may be implemented. The detailed description includes specific details to provide a thorough understanding of the embodiments. However, it will be apparent to those skilled in the art that the embodiments may be implemented without such specific details.

Most terms used in the embodiments are selected from general terms that are widely used in the relevant field, but some terms may be arbitrarily selected by the applicant, and meanings of the terms will be described in detail in the following description as necessary. Accordingly, the embodiments should be understood based on intended meanings of the terms rather than based on simple names or meanings of the terms.

The embodiments relate to a position information system and broadcast network data transmission. More particularly, the embodiments relate to a technique for integration of Radio Technical Commission for Maritime Services (RTCM) messages and optimization of transmission in a broadcast network. The technique is configured to improve a structure of an RTCM message, integrate RTCM messages generated from a plurality of reference stations or multiple position information providing sites for each reference station, and include packet length information, thereby optimizing transmission efficiency in accordance with characteristics of the broadcast network.

A method for optimizing transmission in a broadcast network based on integration of RTCM messages for each reference station and inclusion of packet length information according to the embodiments may include: (1) RTCM message integration: integrating a plurality of RTCM messages into a single container based on a format of message 1005/1006, removing individual cyclic redundancy check (CRC) information of each RTCM message, and adding CRC information only to an entire container; (2) packet length information addition: changing an existing 12-bit Station ID of message 1005/1006 to information indicating a total number of bytes of RTCM messages, and setting reserved 10 bits as a reference station identifier so that an end point of data may be predicted; and (3) group CRC and group termination bit addition: adding, at an end portion of message 1005/1006, a 24-bit group CRC calculated for an entire message and optionally a 16-bit termination bit so that termination of a packet may be clearly identified.

In a method for optimizing transmission of RTCM data in a broadcast network according to an embodiment, a plurality of RTCM messages generated for one reference station may be integrated and configured as a single container message. Individual CRC information included in each RTCM message constituting the container message may be removed, and single CRC information may be added to an entire packet configured as the container message. In addition, among the RTCM messages, an existing 12-bit Station ID field of message 1005/1006 including reference station coordinate information may be used as length information indicating a total number of bytes of RTCM data included in the container for the corresponding reference station, and a 10-bit Reserved field may be set as a reference station identifier for identifying the reference station. Furthermore, a 24-bit group CRC calculated for data constituting the container message may be added at an end portion of message 1005/1006, and, if necessary, a 16-bit termination bit may be optionally appended so that a receiving UE may clearly recognize whether termination of a packet has occurred.

RTCM is a standard message format for transmitting satellite position correction information and is defined to provide various types of correction information by assigning unique message type numbers such as 1001 and 1002. Among these messages, message 1006 includes reference station coordinate information and plays an important role in enabling a data receiver to recognize precise reference coordinates of a reference station and perform position correction by including three-dimensional position information and antenna position information of a Global Navigation Satellite System (GNSS) reference station.

In order to improve efficiency of signal transmission for each reference station, the embodiments utilize message 1006 to configure a container for each reference station that includes all RTCM messages corresponding to the reference station. In the related art, message 1006 is defined to include a 12-bit Message Type field, a 12-bit Reference Station ID field, and a 10-bit Reserved field arranged sequentially. In the embodiments, the field structure is extended and applied to perform data integration for each reference station and to optimize transmission in a broadcast network.

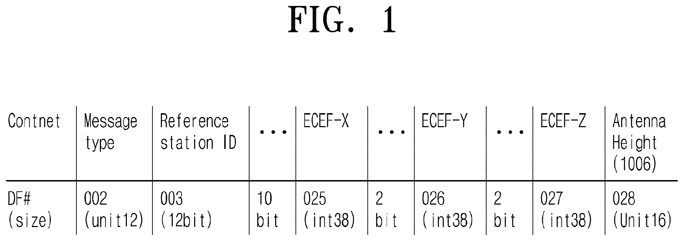

FIG. 1 illustrates a field configuration of message 1006 defined in an RTCM standard in accordance with the embodiments.

As illustrated in FIG. 1, message 1006 includes a 12-bit data field DF002 indicating a Message Type and a 12-bit data field DF003 indicating a Reference Station ID arranged sequentially. A 10-bit Reserved field is subsequently provided for future extension or a specific application. Thereafter, fields for representing Earth-Centered Earth-Fixed (ECEF) coordinates of the reference station are sequentially arranged. Specifically, the fields include a 38-bit integer field DF025 representing an ECEF-X coordinate and an adjacent 2-bit auxiliary field, a 38-bit integer field DF026 representing an ECEF-Y coordinate and an adjacent 2-bit auxiliary field, and a 38-bit integer field DF027 representing an ECEF-Z coordinate. Finally, a 16-bit field DF028 indicating an antenna height is arranged such that three-dimensional position information and antenna height information of the reference station are completed within a single message 1006. The conventional structure of message 1006 serves as a basis for field reconfiguration for integration of RTCM messages for each reference station and optimization of transmission in a broadcast network, as described in the following embodiments.

In the embodiments, the conventional field structure of message 1006 illustrated in FIG. 1 is modified as follows to be suitable for data integration for each reference station and optimization of transmission in a broadcast network. First, the Reference Station ID field conventionally defined as 12 bits is changed to a length information field indicating a total number of bytes of all RTCM messages transmitted for the corresponding reference station. In addition, a 10-bit field that is conventionally reserved is redefined as a reference station number field for identifying the reference station. In this case, a bit allocation for the length information and the reference station number may be flexibly adjusted within a total of 22 bits according to a service environment, the number of reference stations, and a message length, thereby enabling efficient bit resource allocation in various broadcast network environments. Through the structural modification, a receiving UE may easily distinguish a range of a data block for each reference station and may clearly identify an end point of a message for each reference station.

In addition, in the embodiments, a CRC for message 1006 is generated and inserted in accordance with a conventional RTCM standard to maintain compatibility with message 1006. Thereafter, other RTCM messages belonging to the same reference station (e.g., observation information messages and other correction messages) are sequentially concatenated after message 1006 to form a container message for the reference station, after removal of individual CRC fields included in the respective messages. According to the embodiments, individual CRCs included in respective RTCM messages may be removed or retained. For entire data combined, a 24-bit group CRC is appended, and the group CRC field is set to all '0' values in accordance with the embodiments. In addition, to clearly indicate termination of a group message, a 16-bit group termination bit may be further included, and the group termination bit is set to 0x40 and 0x40 such that a receiver may reliably recognize a termination point of the container message. According to the configuration, transmission of data for each reference station becomes easier, packet boundary recognition and resynchronization are facilitated, and stability and efficiency of RTCM data transmission in a broadcast network environment are improved.

The embodiments may include the following to efficiently transmit RTCM-based correction information in a broadcast network environment. First, the embodiments include an RTCM message integration configuration in which a plurality of RTCM messages are integrated into a single container based on message 1006, individual CRCs included in respective RTCM messages constituting the container are removed, and a single CRC is added only to the entirety of the container. Second, a conventional 12-bit Station ID field of message 1006 is changed to packet length information indicating a total number of bytes of RTCM data included in the container for the corresponding reference station, and a 10-bit field that is conventionally reserved is set as a reference station number, thereby enabling a receiver to predict an end point of data in advance and easily distinguish data blocks for respective reference stations.

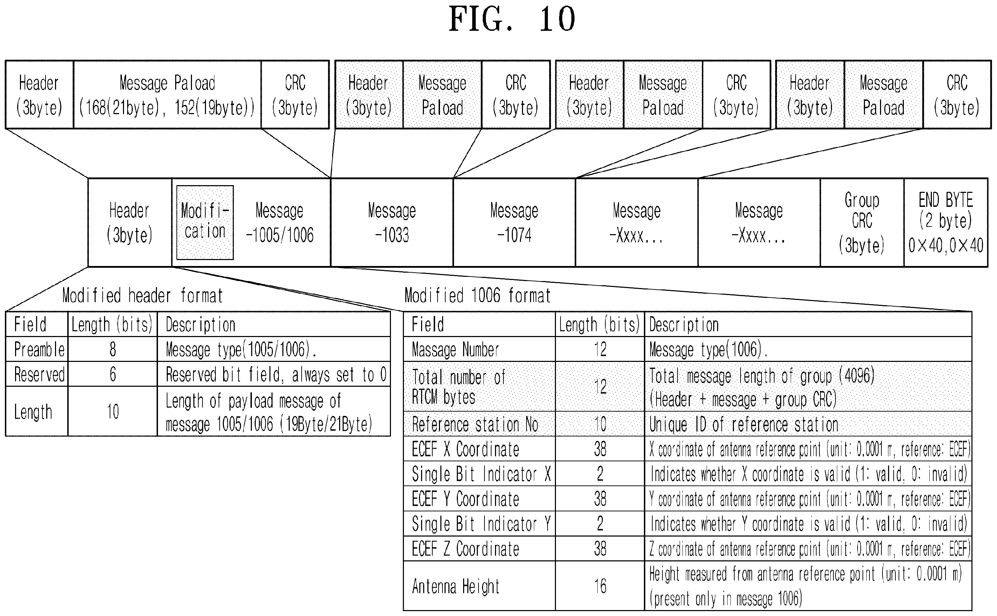

Referring to the field configuration of message 1006 illustrated in FIG. 10, an order of a reference station number field indicating a unique ID of a reference station and a total RTCM byte count field indicating a total length (4096) (header + message + group CRC) of a group message may be interchanged.

For example, according to a first example, fields of message 1006 may include a reference station number field indicating a unique ID of a reference station and a total RTCM byte count field indicating a total length (4096) (header + message + group CRC) of a group message. Alternatively, according to a second example, fields of message 1006 may include a total RTCM byte count field indicating a total length (4096) (header + message + group CRC) of a group message and a reference station number field indicating a unique ID of a reference station.

Third, a 24-bit group CRC corresponding to entire container data (e.g., a value set to '0') and a 16-bit group termination bit are added at an end portion of message 1006 such that a receiver may clearly recognize whether a packet has terminated and reliably determine a packet boundary. Through a combination of the elements, the embodiments provide integrated transmission of RTCM messages for each reference station, identification of a data end point based on packet length information, and packet termination recognition using the group CRC and the group termination bit.

According to the embodiments, data transmission efficiency is significantly improved. By integrating a plurality of RTCM messages into a single container and removing individual CRCs redundantly included in respective messages while adding a single CRC only to the entirety of the container, identical correction information may be transmitted using a smaller number of bits. Accordingly, transmission overhead is reduced, and limited broadcast network resources may be utilized more efficiently.

In addition, the embodiments provide improved data reception stability optimized for a broadcast network environment. By explicitly including information indicating a total number of bytes of RTCM data contained in a container within message 1006, a receiving UE may easily identify an end position of the container in a received data stream. This simplifies packet boundary recognition and resynchronization procedures and enhances stability of data reception in an environment having one-way communication and fixed bandwidth characteristics, such as a broadcast network.

Furthermore, the embodiments provide scalability while maintaining compatibility with existing systems. By designing field reconfiguration and additional information within a scope that preserves a basic message structure and specification of RTCM, interoperability with existing RTCM-based equipment and infrastructure may be maintained, while extended functionality suitable for broadcast network characteristics may be provided. Accordingly, the transmission technique according to the embodiments may be gradually introduced and operated without substantial modification of existing systems.

A message integration method according to an embodiment may include acquiring a plurality of RTCM messages collected from a plurality of position information sites, removing individual CRCs included in respective RTCM messages, and sequentially arranging the RTCM messages from which the CRCs have been removed within a container based on message 1006.

Referring to FIG. 10, in an RTCM (group) message structure according to the embodiments, a CRC field may be optionally included or omitted. To facilitate expansion of an RTCM message according to the embodiments, the CRC field may be selectively included or omitted.

In a 12-bit Station ID field of the container of message 106, a total number of bytes of all RTCM messages included in the container is recorded, and in a 10-bit Reserved field of the container, a reference station number corresponding to the container is recorded, thereby enabling a receiver to easily identify a data range and a termination point for each reference station. Thereafter, a CRC is generated and added to an entire packet configured as the container, a 24-bit group CRC set to a value of '0' is appended at an end of the packet, and a 16-bit group termination bit set to 0x40 and 0x40 is inserted, thereby enabling a receiver to clearly recognize whether the packet has terminated and reliably determine a packet boundary.

As an example of a packet structure according to an embodiment, the packet may include a 1006 message header field including a header of message 1006, a Station ID field (e.g., 12 bits) for indicating a total number of bytes of all RTCM messages included in the packet, and a Reserved field (e.g., 10 bits) for indicating a reference station number corresponding to the packet, arranged sequentially. A plurality of RTCM messages corresponding to the reference station are sequentially arranged in a form of RTCM message 1, RTCM message 2, ..., and a CRC information field generated for an entirety of the plurality of RTCM messages follows thereafter. In addition, after the CRC information field, a 24-bit group CRC field set to a value of '0' is added for group-level error detection with respect to the entire packet, and a group termination bit field (e.g., 16 bits set to 0x40 and 0x40) is finally arranged to clearly indicate termination of the packet, thereby implementing a packet structure having a format of "[1006 message header] + [Station ID (indicating total RTCM byte count)] + [Reserved (indicating reference station number)] + [RTCM message 1] + [RTCM message 2] + ... + [CRC information] + [group CRC (24-bit 0)] + [group termination bit (0x40, 0x40)]."

A method for optimizing transmission of RTCM messages in a broadcast network according to an embodiment may include integrating a plurality of RTCM messages into a single container message, removing individual CRCs included in respective RTCM messages constituting the container message, and generating and adding a single CRC to an entire packet configured as the container message. In addition, a conventional 12-bit Station ID field of message 1006 including reference station coordinate information among the RTCM messages is changed to information indicating a total number of bytes of all RTCM messages included in the container, and a 10-bit field that is conventionally defined for reserved use is set as a reference station number for identifying the reference station, thereby providing a data transmission configuration optimized for a broadcast network, which enables easy prediction of a data end point and classification and processing of data for each reference station.

Referring to the field configuration of message 1006 illustrated in FIG. 10, an order of a reference station number field indicating a unique ID of a reference station and a total RTCM byte count field indicating a total length (4096) (header + message + group CRC) of a group message may be interchanged.

For example, according to a first example, fields of message 1006 may include a reference station number field indicating a unique ID of a reference station and a total RTCM byte count field indicating a total length (4096) (header + message + group CRC) of a group message. Alternatively, according to a second example, fields of message 1006 may include a total RTCM byte count field indicating a total length (4096) (header + message + group CRC) of a group message and a reference station number field indicating a unique ID of a reference station.

In addition, a 24-bit group CRC set to a value of '0' for performing group-level error detection with respect to entire data included in the container message, and a 16-bit termination bit for enabling a receiver to clearly recognize whether a packet has terminated, may be further included at an end portion of message 1006 to perform RTCM message transmission.
In this case, insertion of the group CRC and the group termination bit may be selectively configured according to a service environment, a transmission policy, or a system design requirement.

The embodiments provide a novel method for transmitting RTCM messages more efficiently in a broadcast network environment, enabling simultaneous improvement of stability and efficiency of data transmission.

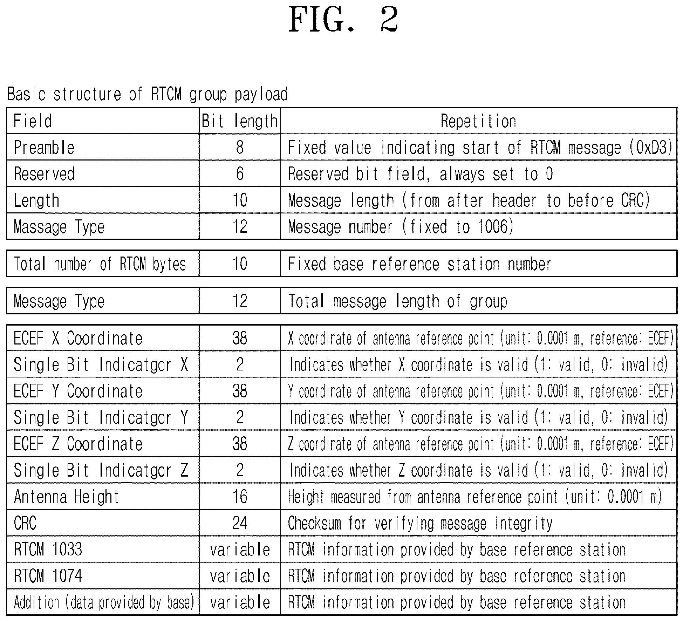

FIG. 2 illustrates a basic structure of an RTCM group payload in accordance with the embodiments.

As illustrated in FIG. 2, the group payload first includes an 8-bit Preamble field, the field being set to a fixed value (e.g., 0xD3) indicating a start of an RTCM message. Next, a 6-bit Reserved field is arranged, the field being a reserved bit field that is always set to '0' and may be used for future extension. A subsequent Length field is composed of 10 bits and indicates a message length from after a header to immediately before a CRC, that is, a length of the group payload. A Message Type field is composed of 12 bits, and in the embodiments, a fixed value corresponding to message type 1006 including reference station coordinate information is set.

Subsequently, a 10-bit reference station number field for identifying a reference station corresponding to the group payload is arranged, the field indicating a fixed base reference station number. A subsequent total RTCM byte count field is composed of 12 bits and indicates a total number of bytes of RTCM messages included in the group, thereby enabling a receiver to easily identify an overall length and a termination position of a group message. To represent three-dimensional position information of an antenna of the reference station, a 38-bit ECEF X Coordinate field, a 38-bit ECEF Y Coordinate field, and a 38-bit ECEF Z Coordinate field are sequentially arranged in a following region, and 2-bit Single Bit Indicator X, Y, and Z fields indicating validity of respective coordinate values are respectively arranged adjacent thereto. The coordinate fields represent X, Y, and Z coordinates of an antenna reference point in units of 0.0001 m based on an ECEF coordinate system, and each Single Bit Indicator field indicates whether the corresponding coordinate is valid (1: valid, 0: invalid). A subsequent Antenna Height field is composed of 16 bits and indicates an antenna height measured from the antenna reference point in units of 0.0001 m.

After the position information fields described above, a 24-bit CRC field for verifying integrity of a group message is arranged, the CRC field being used for error detection with respect to data included in the group payload. After the CRC field, additional RTCM message information provided by the reference station may be arranged in variable length, for example, in a form of an RTCM 1033 field, an RTCM 1074 field, and, if necessary, other additional RTCM data fields. The fields include various types of RTCM information, such as antenna information, signal tracking information, and observation data provided by the base reference station, on a group basis, thereby forming the group payload structure for implementing integration of RTCM messages for each reference station and optimization of transmission in a broadcast network as proposed in the present disclosure.

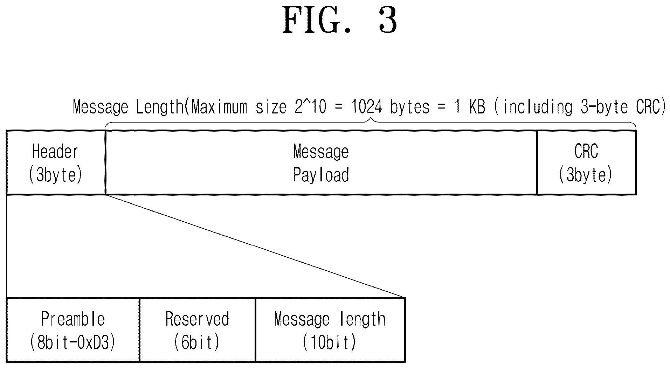

FIG. 3 is a diagram schematically illustrating a basic structure of an RTCM message in accordance with the embodiments.

As illustrated in FIG. 3, a basic RTCM message includes a Header region, a Message Payload region, and a CRC region, and a total message length may be defined to support up to 210 bytes, that is, 1024 bytes (including a 3-byte CRC). The Header is composed of a total of 3 bytes and, in detail, includes an 8-bit Preamble field, a 6-bit Reserved field, and a 10-bit Message Length field. The Preamble field is set to a fixed value indicating a start of an RTCM message, for example, 0xD3, and the Reserved field is a reserved bit region that is always set to '0' for future extension. The Message Length field represents, in 10 bits, a payload length from after the Header to immediately before the CRC, thereby enabling a receiver to determine the size of the Message Payload and identify a boundary of the entire message. The Message Payload region includes actual RTCM data (e.g., message type, reference station ID, coordinate information, etc.), and a 3-byte (24-bit) CRC field is arranged at an end of the message to verify integrity of a transmitted message.

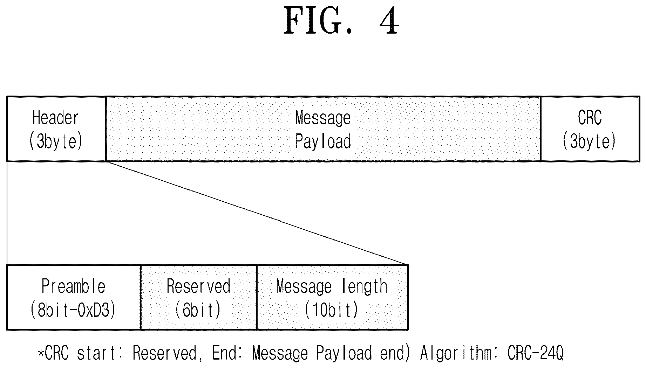

FIG. 4 schematically illustrates a range over which a CRC is calculated in a basic RTCM message structure in accordance with the embodiments.

As illustrated in FIG. 4, an RTCM message includes a Header region, a Message Payload region, and a CRC region, and CRC calculation includes only a portion of the Header and the Message Payload. More specifically, a Preamble field (8 bits) within the Header is excluded from CRC calculation, and the CRC calculation range includes a Reserved field (6 bits) positioned after the Preamble, a Message Length field (10 bits), and extends to an end of the Message Payload region. A 3-byte (24-bit) CRC field located at an end of the message is excluded from CRC calculation, and a CRC value is derived according to a CRC-24Q algorithm using a continuous bit sequence from the Reserved field to a payload termination point as input. Accordingly, a receiver may verify integrity of data within the CRC calculation range.

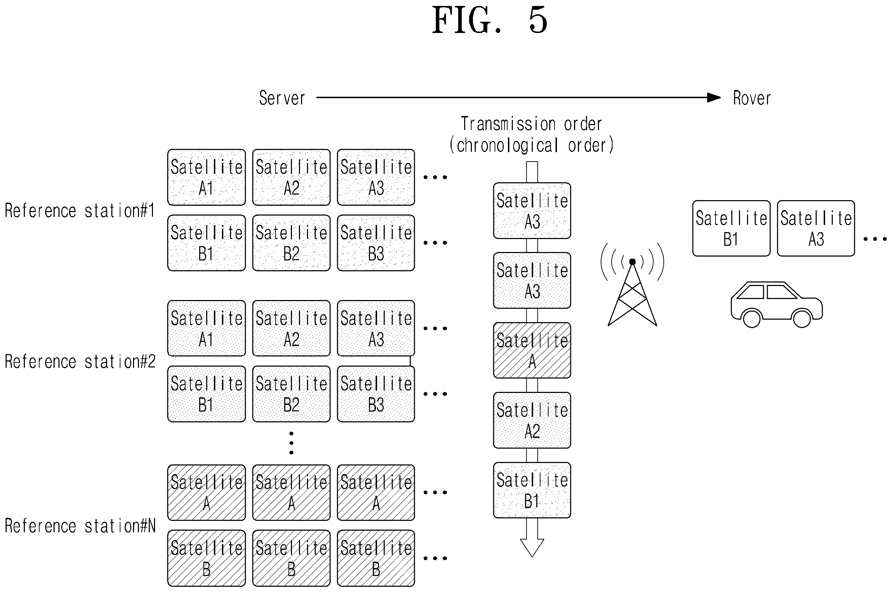

FIG. 5 schematically illustrates a message transmission structure for transmitting an RTCM message from a broadcast server in accordance with the embodiments.

As illustrated in FIG. 5, from the server perspective, a plurality of RTCM messages corresponding to satellites A1, A2, A3 and B1, B2, B3 are generated by a plurality of reference stations, such as reference station #1, reference station #2, ..., and reference station #N. However, in the related art, such RTCM messages for each reference station and each satellite are not integrated on a per-reference-station basis but are simply enqueued according to a transmission time order and transmitted serially through a broadcast network. As a result, in a message stream received by a rover UE, satellite-related messages originating from different reference stations, such as reference station #1, reference station #2, and reference station #N, are intermingled. In addition, all RTCM messages corresponding to a specific reference station do not arrive consecutively, resulting in a problem in which only some messages are received sporadically. In such a structure, a delay may occur until the rover acquires a complete set of correction information for the specific reference station, and activation and position correction processes for each reference station may be performed inefficiently.

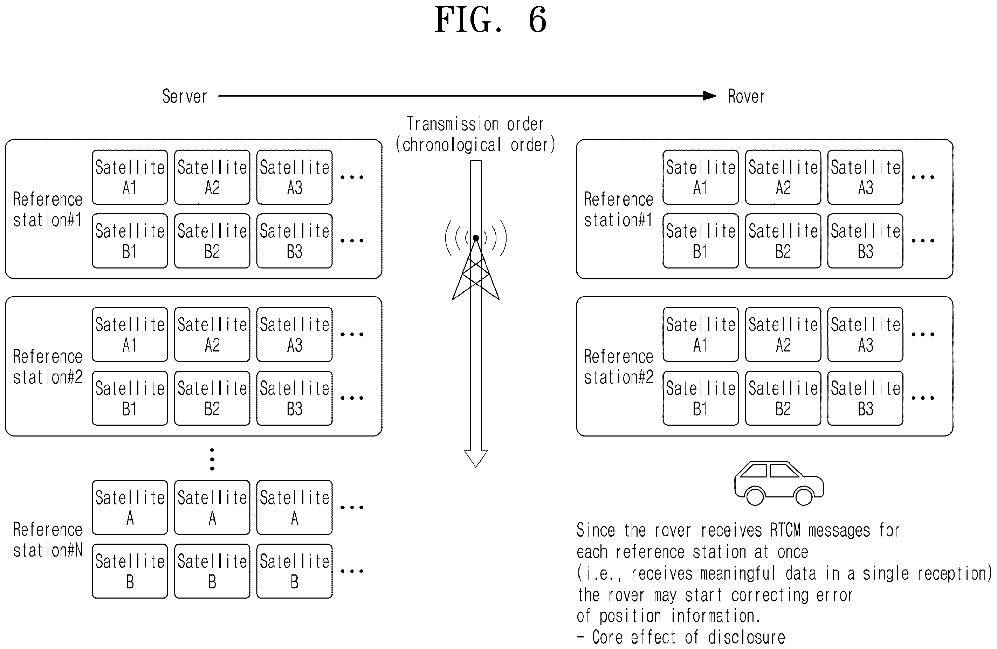

FIG. 6 illustrates a concept of an improved RTCM message transmission structure in a broadcast server in accordance with the embodiments.

As illustrated in FIG. 6, from the server perspective, for each of reference station #1, reference station #2, ..., and reference station #N, a plurality of RTCM messages corresponding to satellites A1, A2, A3 and B1, B2, B3 generated by the respective reference station are integrated in advance into a container for each reference station and stored. That is, for reference station #1, all satellite-related RTCM messages provided by the reference station are combined into a single container, and similarly, for reference station #2 and reference station #N, corresponding RTCM messages are respectively combined into single containers.

Thereafter, the broadcast server sequentially transmits, through a broadcast network, a group message for reference station #1, a group message for reference station #2, ..., and a group message for reference station #N according to a transmission time order. By transmitting, as a single unit, a complete set of RTCM messages for each reference station as described above, a rover UE may acquire all RTCM data required for position correction of a specific reference station by receiving a container message for the reference station only once. As a result, compared with a conventional structure in which messages originating from different reference stations arrive in an intermingled manner, activation time for each reference station is reduced, and the rover may immediately start correcting position error using meaningful correction information. This structure clearly demonstrates a core effect of the present disclosure, that is, reduction of correction start time and improvement of reliability of position information resulting from integration of RTCM messages on a per-reference-station basis.

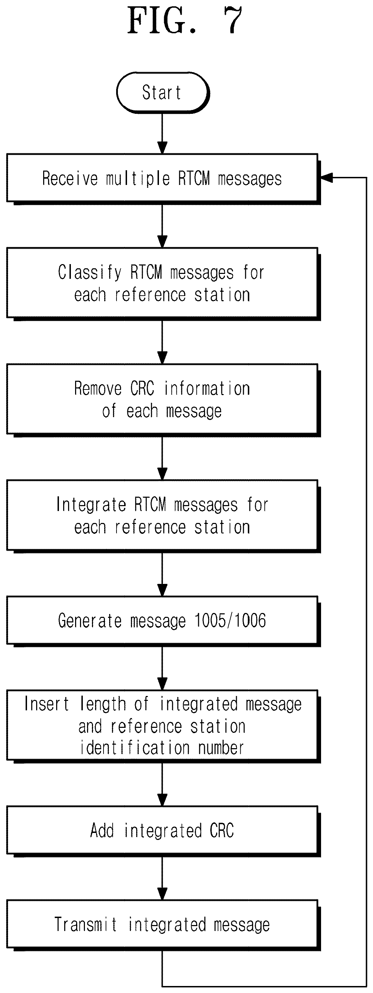

FIG. 7 is a flowchart illustrating a method for optimizing transmission in a broadcast network based on integration of RTCM messages for each reference station and inclusion of packet length information in accordance with the embodiments.

First, after a start step, a broadcast server receives a plurality of RTCM messages from an external source. Subsequently, the received RTCM messages are classified for each reference station based on reference station identification information. Next, individual CRCs included in the respective RTCM messages are removed to minimize redundant error detection information during an integration process. Thereafter, RTCM messages belonging to the same reference station are integrated to form a single RTCM message group for each reference station.

For the RTCM message group integrated for each reference station, the server generates message 1005/1006 including reference station coordinate information and inserts total length information of the integrated message and a reference station identification number into message 1005/1006. Thereafter, a group-level CRC is calculated and added for the entirety of the integrated message group, and finally, the configured integrated message is transmitted through a broadcast network, thereby completing integrated transmission of RTCM messages on a per-reference-station basis. Through the procedure, the present disclosure enables efficient integration of RTCM messages for each reference station and reliable broadcast transmission thereof.

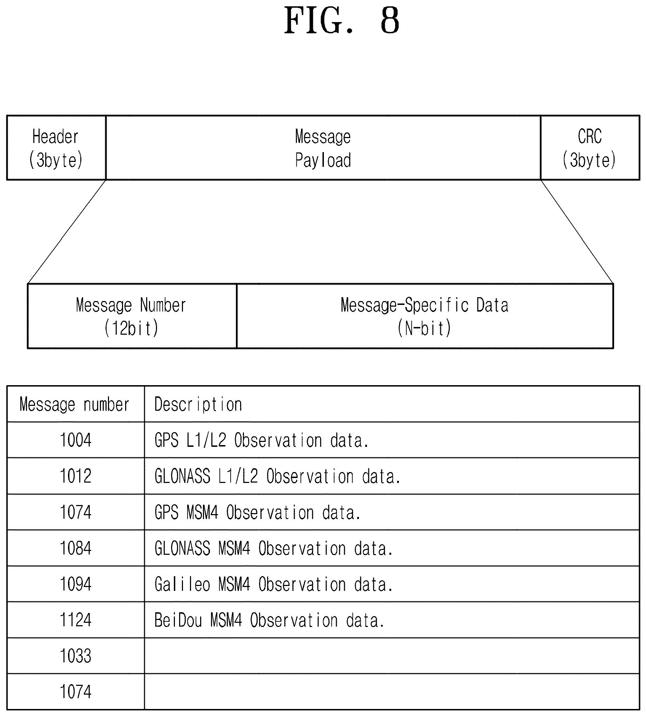

FIG. 8 illustrates a configuration of a Message Payload region in a basic RTCM message structure in accordance with the embodiments.

As illustrated in FIG. 8, a basic RTCM message includes a Header region, a Message Payload region, and a CRC region. The Message Payload region is further divided into a 12-bit Message Number field and a variable-length Message-specific Data field. The Message Number field is used as a code for identifying a type of observation data or correction information included in the payload. For example, as illustrated in a table at a lower portion of FIG. 8, message number 1004 may indicate GPS L1/L2 observation data, 1012 may indicate GLONASS L1/L2 observation data, 1074 may indicate GPS MSM4 observation data, 1084 may indicate GLONASS MSM4 observation data, 1094 may indicate Galileo MSM4 observation data, and 1124 may indicate BeiDou MSM4 observation data. In addition, 1033, 1074, and the like may be used as RTCM message types providing reference station information or additional observation information, and depending on a message type, a bit length and an internal structure of a subsequent Message-specific Data field vary. The basic structure serves as a basis for a container message design described in the present disclosure, in which a plurality of RTCM messages are integrated on a per-reference-station basis and packet length information, a group CRC, and a termination bit are added.

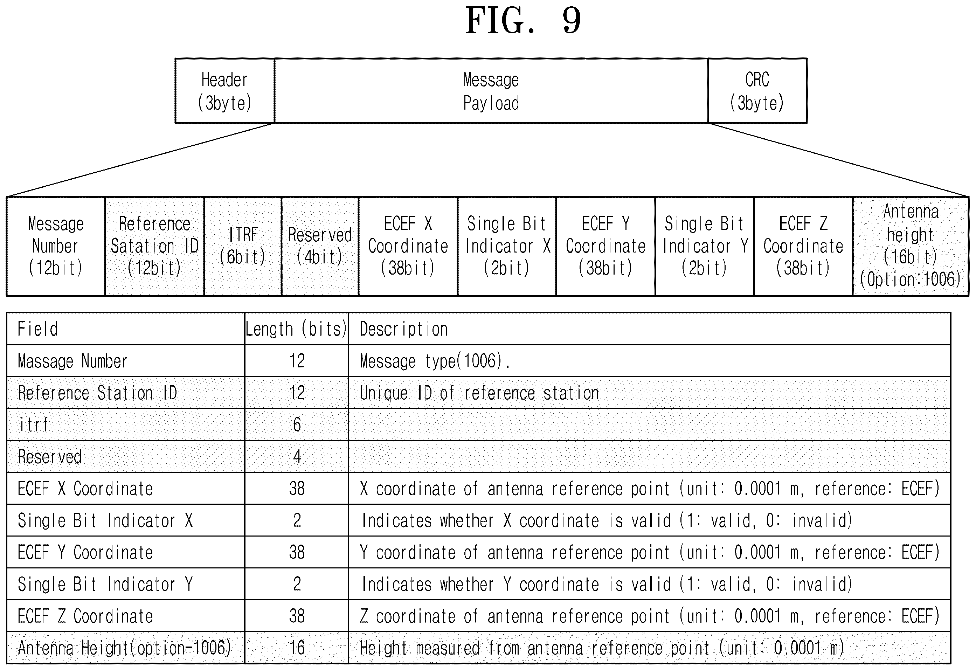

FIG. 9 illustrates a payload structure of messages 1006/1005 among basic RTCM messages in accordance with the embodiments.

As illustrated in FIG. 9, an RTCM message includes a 3-byte Header, a Message Payload, and a 3-byte CRC field. For message 1006/1005, the Payload has a length of 168 bits (21 bytes), or 152 bits (19 bytes) when an Antenna Height field is excluded. A 12-bit Message Number field is positioned at the beginning of the Payload to indicate a message type, and in this example, the field indicates message 1006. Subsequently, a 12-bit Reference Station ID field indicates a unique ID of a reference station, and a 6-bit International Terrestrial Reference Frame (ITRF) field indicates information related to a used reference coordinate system. A subsequent 4-bit Reserved field is a region reserved for future extension or a specific application.

Next, to represent three-dimensional position information of an antenna reference point of the reference station, a 38-bit ECEF X Coordinate field, a 38-bit ECEF Y Coordinate field, and a 38-bit ECEF Z Coordinate field are sequentially arranged. Respective coordinate values are represented as integer values in units of 0.0001 m based on an ECEF coordinate system. Adjacent to each coordinate field, 2-bit Single Bit Indicator X, Single Bit Indicator Y, and Single Bit Indicator Z fields are respectively arranged. The fields are used as flags indicating whether corresponding X, Y, and Z coordinates are valid (1: valid, 0: invalid). Finally, a 16-bit Antenna Height (option-1006) field optionally included in message 1006 represents a height measured from the antenna reference point in units of 0.0001 m, thereby providing accurate antenna height information of the reference station. The basic message structure of messages 1006/1005 is used as a basis for implementing a technique for optimizing transmission in a broadcast network including integration of RTCM messages for each reference station and packet length information, which will be described later in the present disclosure.

FIG. 10 is a diagram illustrating a structure of an improved RTCM group message, that is, a configuration of a group message payload using message 1006/1005, in accordance with the embodiments.

As illustrated in FIG. 10, a group message includes a 3-byte Header, a Message Payload, and a CRC (Group CRC) field for the entire group, similar to the basic structure described above. In the Message Payload region, a modified message 1005/1006 is first arranged, and thereafter, other RTCM messages provided by a reference station (e.g., message 1033, message 1074, and other messages indicated in a form of "Message-Xxxx ...") are sequentially concatenated. A 3-byte group CRC field for verifying integrity of the entire group is added at an end of the group message.

According to a "Modified Header Format" table, the Header of a group message includes an 8-bit Preamble field, a 6-bit Reserved field, and a 10-bit Length field. The Preamble is used as a fixed value indicating a start of message type 1005/1006, the Reserved field is a reserved bit region always set to '0', and the Length field indicates a length of a modified payload of message 1005/1006 (e.g., 19 bytes or 21 bytes). As illustrated in the "Modified 1006 Format" table, a modified message 1006 includes a 12-bit Message Number field (indicating message type 1005/1006), a 10-bit reference station number field (reference station number), and a 12-bit total RTCM byte count field, arranged sequentially. The total RTCM byte count field is defined to indicate a total length of all RTCM data included in a group message according to the present disclosure (e.g., header + message + group CRC). As in conventional message 1006, ECEF X/Y/Z coordinate fields (each 38 bits), Single Bit Indicator X/Y/Z fields (each 2 bits) indicating coordinate validity, and optionally an Antenna Height field (16 bits) are sequentially arranged.

Through the structure, the modified message 1005/1006 provides reference station identification information and an overall group length at the beginning of a group message corresponding to a reference station, thereby enabling a receiver to clearly recognize a range and a termination position of the group message for each reference station. In addition, various RTCM messages, such as 1033 and 1074, arranged thereafter may be integrated and transmitted as a single group, thereby realizing an improved group message structure.

In the embodiments, a transmitting device (or correction information server) may transmit a plurality of correction messages (e.g., RTCM messages 1005/1006, 1033, 1074, 10xx, etc.) bundled into a single message group. In this case, each message may have a unit message format including a Header (3 bytes), a Message Payload, and a CRC (3 bytes), and after the unit messages are arranged sequentially, a group CRC (3 bytes) for verifying integrity of the group may be added. In addition, to clearly indicate termination of the group, an end byte (2 bytes) (e.g., 0x40, 0x40) may be appended after the group CRC.

In the embodiments, the Header may include a Preamble field, a Reserved field, and a Length field. For example, the Preamble field may be an 8-bit field indicating a message type and identify message 1005 or 1006, the Reserved field may be 6 bits and may always be set to 0, and the Length field may be 10 bits and indicate a payload length of the corresponding message (e.g., 19 bytes or 21 bytes). Accordingly, a receiving device may quickly determine a boundary of the payload based on the Length field of the Header and verify integrity of a unit message based on the CRC.

FIG. 10 illustrates a field configuration of message 1006. In the embodiments, message 1006 may include a Message Number field (12 bits) indicating a message type and a total byte count field (12 bits) indicating an overall size of group-level transmission data (e.g., header + messages + group CRC, up to 4096 bytes). In addition, message 1006 may include a Station ID (10 bits) and ECEF X/Y/Z Coordinate fields (each 38 bits) of a reference point. For each coordinate, corresponding validity indicator bits (Single Bit Indicator X/Y/Z, each 2 bits) may be included to indicate whether a corresponding coordinate value is valid or invalid (e.g., 1 = valid, 0 = invalid). Furthermore, message 1006 may additionally include an Antenna Height field (16 bits), which may be configured to indicate a height measured from the reference point (e.g., in units of 0.0001 m).

Referring to the field configuration of message 1006 illustrated in FIG. 10, an order of a reference station number field indicating a unique ID of a reference station and a total RTCM byte count field indicating a total length (4096) (header + message + group CRC) of a group message may be interchanged.

For example, according to a first example, fields of message 1006 may include a reference station number field indicating a unique ID of a reference station and a total RTCM byte count field indicating a total length (4096) (header + message + group CRC) of a group message. Alternatively, according to a second example, fields of message 1006 may include a total RTCM byte count field indicating a total length (4096) (header + message + group CRC) of a group message and a reference station number field indicating a unique ID of a reference station.

According to the embodiments, by combining CRCs for each unit message, a group CRC, and an end byte as described above, (i) error detection at a unit message level, (ii) integrity verification at a group level, and (iii) clear identification of group boundaries may be simultaneously achieved. Inclusion or omission of the CRC may be configured as an option depending on a network environment or receiver implementation.

Referring to FIG. 10, in an RTCM (group) message structure according to the embodiments, a CRC field may be selectively included or omitted.

In addition, a header according to the embodiments may include an 8-bit Preamble field indicating a message type, a 6-bit Reserved field indicating a reserved bit field, and a 10-bit Length field indicating a payload length of message 1005/1006.

The Reserved field according to the embodiments may be used for the Length field of the Header and/or the reference station number field of the Payload. For example, when the length of a payload message is not representable solely by the 10-bit Length field, one or more bits among 6 bits of the Reserved field of the Header may be used to further represent the length of the payload message. Similarly, when the unique ID of a reference station is not representable solely by the 10-bit reference station number field, one or more bits among the 6 bits of the Reserved field of the Header may be used to further represent the unique ID of the reference station.

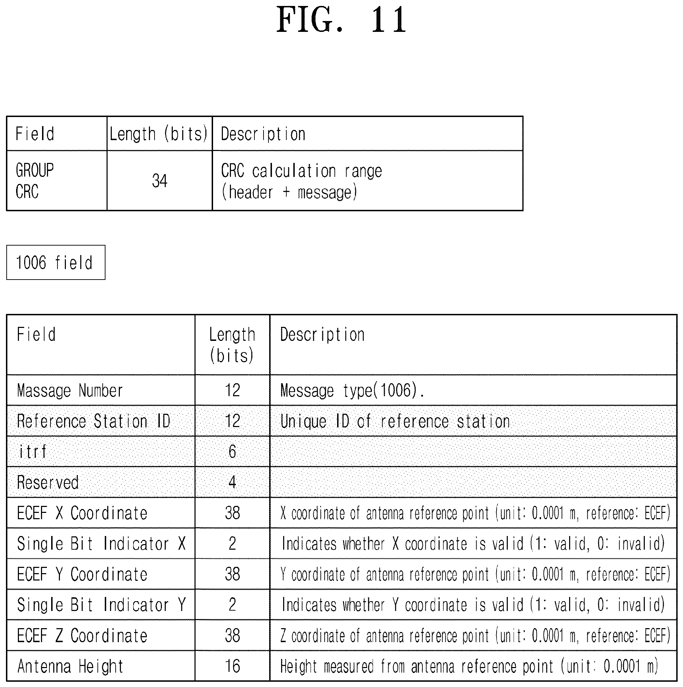

FIG. 11 illustrates an example of a group CRC and a format of message 1006 in an improved RTCM group message structure according to the embodiments.

As described above, a 3-byte (24-bit) Group CRC field is arranged at an end of a group message. The group CRC is an error detection code calculated over a range including the Header of the group message and all message data following the Header, and is used to verify integrity of the group-level message. A "1006 Format" table exemplifies a field configuration of message 1006 used in the group message of the present disclosure. A 12-bit Message Number field indicates message type 1006, and a 12-bit Reference Station ID field indicates a unique ID of a reference station. Subsequently, a 6-bit ITRF field indicates a reference coordinate system in use, and a 4-bit Reserved field is provided for future extension or a specific purpose. Based on the basic field structure of message 1006, the present disclosure implements an improved group message structure combined with a group CRC by adding or modifying information such as a reference station number and a total byte count of a group.

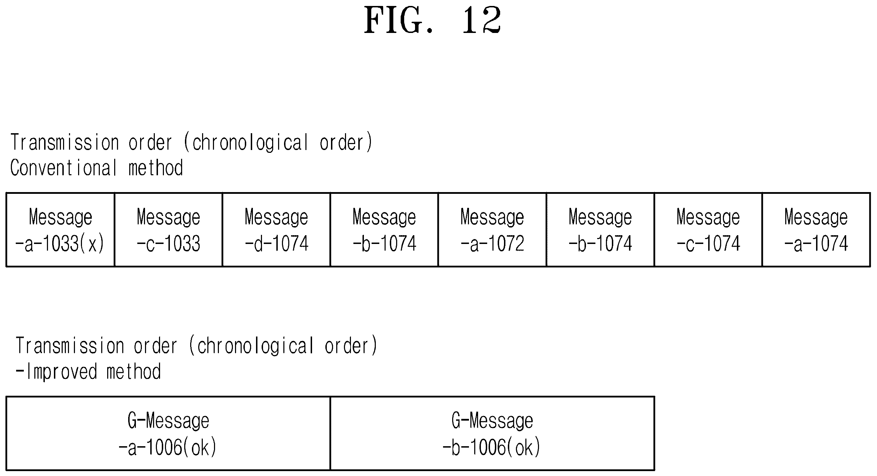

FIG. 12 illustrates a transmission sequence of an RTCM message according to an improved method in accordance with the embodiments.

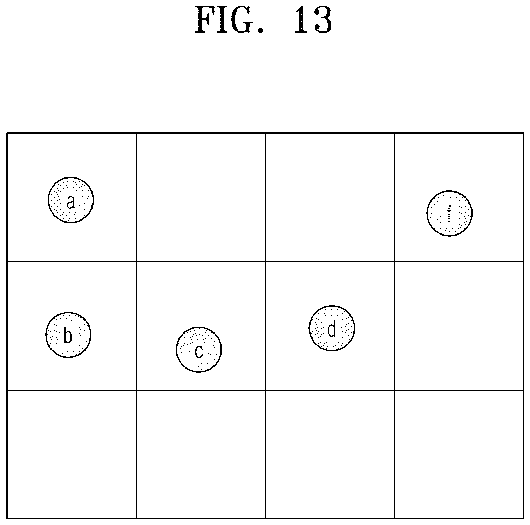

FIG. 13 illustrates an example of a reference station arrangement in accordance with the embodiments.

A service area is divided into a plurality of grid cells, and symbols a, b, c, d, and f indicating candidate locations of reference stations or actual reference station positions are exemplarily arranged within respective cells. The grid-based representation may be used, for example, to visually distinguish correction information service areas assigned to respective reference stations or to analyze spacing and distribution among adjacent reference stations. The representation corresponds to an exemplary configuration for spatially defining target reference stations to which the RTCM message integration and transmission technique described in the present disclosure is applied.

As illustrated in an upper portion of FIG. 12, in a conventional transmission packet structure, various RTCM messages (e.g., 1033, 1074, 1072, etc.) generated by reference stations a, b, c, and d are transmitted in a random order in time order. In this case, a rover receiver may sporadically receive only some messages corresponding to reference station a (e.g., a-1033, a-1074, etc.), and until all observation and correction data for reference station a are completely received, it is difficult to perform meaningful position correction based on the reference station.

In contrast, according to an improved method illustrated in a lower portion of FIG. 12, a group message (G-Message) structure according to the present disclosure is applied, and all RTCM message data required for each reference station are integrated into a single group message (e.g., G-Message-a-1006 for reference station a, G-Message-b-1006 for reference station b) and transmitted in time order. A rover may acquire an entire set of messages required for position correction of a reference station by receiving a single G-Message corresponding to the reference station. Accordingly, activation time of the reference station is significantly reduced, and the rover may perform precise correction of the position of the rover.

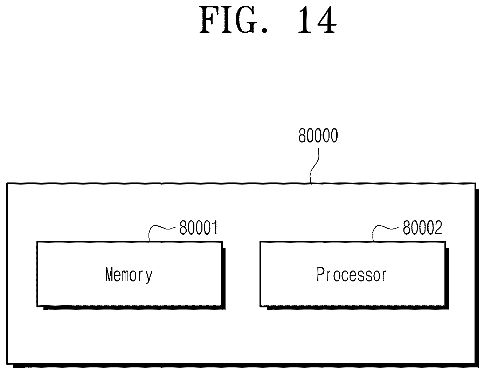

FIG. 14 illustrates an apparatus for optimizing transmission in a broadcast network based on integration of RTCM messages for each reference station and inclusion of packet length information according to the embodiments.

An apparatus 80000 for optimizing transmission in a broadcast network based on integration of RTCM messages for each reference station and inclusion of packet length information includes a memory 80001 and a processor 80002. The processor may perform the following method.

Referring to FIG. 7, a method for transmitting, by a broadcast server, RTCM messages corresponding to a plurality of reference stations to a rover UE through a broadcast network includes: collecting a plurality of RTCM messages for each reference station and generating a single container message based on the plurality of RTCM messages; configuring a station ID bit region and a reserved bit region in at least one RTCM message included in the single container message as a reference station number for identifying the reference station; and adding a group CRC calculated over all messages included in the container message at an end of the at least one RTCM message.

Referring also to CRC removal in FIG. 7, generating the single container message includes: collecting the plurality of RTCM messages for each reference station; removing individual CRC information included in each of the plurality of RTCM messages; integrating the plurality of RTCM messages into the single container message; and generating and adding single CRC information for the container message.

Referring also to FIG. 7, which illustrates reference station number replacement in message 1005/1006, a conventional 12-bit station ID bit region of at least one RTCM message selected from message 1005 or message 1006 included in the container message is set as length information indicating a total number of bytes of RTCM data included in the container message, and a conventional 10-bit reserved bit region is set as a reference station number for identifying the reference station.

Referring also to the group CRC removal in FIG. 7, a 24-bit group CRC calculated over all messages included in the container message is added at an end of at least one RTCM message selected from message 1005 or message 1006 included in the container message, and a 16-bit termination bit for indicating termination of a packet is optionally further added after the group CRC.

Referring also to integration/removal of CRCs and integration of a single CRC, the plurality of RTCM messages are configured as the single container message, CRC information is removed from each of the RTCM messages, and single CRC information for the single container message is added to the single container message.

Referring also to the improved transmission scheme of FIG. 12, the single container message includes all data required for a single reference station without including partial data of the plurality of reference stations.

Referring also to modification of a format of message 1006 in FIG. 10, the message 1006 includes at least one of (1) reference station number information indicating a unique ID of the reference station, or (2) information indicating a total number of bytes of RTCM data representing a total length of a group message including a header, a message, and the group CRC.

Referring also to effects on a rover illustrated in FIG. 6, the rover UE acquires all data for each reference station based on the single container message and corrects position information.

RTCM message transmission method.

Provided herein is an apparatus for transmitting RTCM messages corresponding to a plurality of reference stations to a rover UE through a broadcast network by a broadcast server. The apparatus includes a memory and a processor. The processor is configured to: collect a plurality of RTCM messages for each reference station and generate a single container message based on the plurality of RTCM messages; configure a station identifier (ID) bit region and a reserved bit region in at least one RTCM message included in the single container message as a reference station number for identifying the reference station; and add a group cyclic redundancy check (CRC) calculated over all messages included in the container message at an end of the at least one RTCM message.

The embodiments have been described from perspectives of a method and/or an apparatus, and description of the method and description of the apparatus may be applied complementarily to each other.

For convenience of description, the drawings have been described separately. However, embodiments described with reference to the respective drawings may be combined to implement new embodiments. In addition, according to a need of a person skilled in the art, a computer-readable recording medium in which a program for executing the embodiments described above is recorded may also be designed, and such a recording medium falls within the scope of the embodiments. The method and apparatus according to the embodiments are not limited to configurations and methods described above, and the embodiments may be configured such that all or part of the respective embodiments are selectively combined to allow various modifications. Although preferred embodiments have been illustrated and described, the embodiments are not limited to the specific embodiments described above. Various modifications may be made by a person skilled in the art without departing from the gist of the embodiments as defined in the claims, and such modifications should not be interpreted independently from the technical spirit or scope of the embodiments.

Various components of the apparatus according to the embodiments may be implemented in hardware, software, firmware, or a combination thereof. The components may be implemented on a single chip, for example, as a single hardware circuit, or may be implemented on separate chips according to the embodiments. At least one of the components of the apparatus may include one or more processors configured to execute one or more programs, and the one or more programs may include instructions for causing the one or more processors to perform one or more operations or methods according to the embodiments. Executable instructions for performing the methods or operations of the apparatus may be stored in a non-transitory computer-readable medium (CRM) or other computer program product configured to be executed by one or more processors, or may be stored in a transitory CRM or other computer program product configured to be executed by one or more processors. The memory according to the embodiments may include volatile memory (e.g., RAM) as well as nonvolatile memory, flash memory, programmable read-only memory (PROM), and the like. The embodiments may further include implementations in the form of a carrier wave, such as transmission over the Internet. A processor-readable recording medium may be distributed across computer systems connected via a network, such that processor-readable code is stored and executed in a distributed manner.

In this document, "/" and "," are interpreted as "and/or." For example, "A/B" is interpreted as "A and/or B," and "A, B" is interpreted as "A and/or B." Additionally, "A/B/C" means "at least one of A, B, and/or C." Similarly, "A, B, C" also means "at least one of A, B, and/or C." Further, in this document, "or" is interpreted as "and/or." For example, "A or B" may mean (1) only A, (2) only B, or (3) both A and B. In other words, "or" in this document may mean "additionally or alternatively."

Terms such as "first," "second," and the like may be used to describe various components of the embodiments. However, the various components according to the embodiments should not be limited by such terms. Such terms are used only to distinguish one component from another. For example, a first user input signal may be referred to as a second user input signal. Similarly, a second user input signal may be referred to as a first user input signal. Use of such terms should be interpreted as not departing from the scope of the embodiments. Although a first user input signal and a second user input signal are both user input signals, the first user input signal and the second user input signal do not refer to the same user input signal unless clearly indicated by context.

Terms used to describe the embodiments are for the purpose of describing specific embodiments and are not intended to limit the embodiments. As used in the description and the claims, singular forms are intended to include plural forms unless the context clearly indicates otherwise. Expressions such as "and/or" are intended to include all possible combinations of the listed terms. The term "comprises" or "including" describes the presence of stated features, numbers, steps, elements, and/or components and does not preclude the presence or addition of one or more other features, numbers, steps, elements, and/or components. Conditional expressions such as "when," "if," and the like are not to be interpreted as limited to optional cases. Rather, such expressions indicate that, upon satisfaction of a specific condition or in response to a specific condition, a corresponding operation is performed or a corresponding interpretation applies.

Operations according to the embodiments described in this document may be performed by a transmitting and receiving apparatus including a memory and/or a processor. The memory may store programs for processing and controlling the operations according to the embodiments, and the processor may control various operations described herein. The processor may also be referred to as a controller. Operations according to the embodiments may be implemented by firmware, software, and/or a combination thereof, and such firmware, software, and/or combinations thereof may be stored in the processor or in the memory.

The operations according to the embodiments described above may be performed by the transmitting apparatus and/or the receiving apparatus according to the embodiments. The transmitting and receiving apparatus may include a transceiver configured to transmit and receive media data, a memory configured to store instructions (program code, algorithms, flowcharts, and/or data) for processes according to the embodiments, and a processor configured to control operations of the transmitting and receiving apparatus.

The processor may also be referred to as a controller and may correspond to hardware, software, and/or a combination thereof. The operations according to the embodiments described above may be performed by the processor.

## Claims

1. A method for transmitting, by a broadcast server, Radio Technical Commission for Maritime Services (RTCM) messages corresponding to a plurality of reference stations to a rover user equipment (UE) through a broadcast network, the method comprising:
collecting a plurality of RTCM messages for each reference station and generating a single container message based on the plurality of RTCM messages;
configuring a station identifier (ID) bit region and a reserved bit region in at least one RTCM message included in the single container message as a reference station number for identifying the reference station; and
configuring a station identifier (ID) bit region and a reserved bit region in at least one RTCM message included in the single container message, wherein the reserved bit region is set as a reference station number for identifying the reference station; and
adding a group cyclic redundancy check (CRC) calculated over all messages included in the container message at an end of the at least one RTCM message.

2. The method of claim 1, wherein generating the single container message comprises:
collecting the plurality of RTCM messages for each reference station;
removing individual CRC information included in each of the plurality of RTCM messages;
integrating the plurality of RTCM messages into the single container message; and
generating and adding single CRC information for the container message.

3. The method of claim 1 or 2, wherein a conventional 12-bit station ID bit region of at least one RTCM message selected from message 1005 or message 1006 included in the container message is set as length information indicating a total number of bytes of RTCM data included in the container message, and a conventional 10-bit reserved bit region is set as a reference station number for identifying the reference station.

4. The method of any one of claims 1 to 3, wherein a 24-bit group CRC calculated over all messages included in the container message is added at an end of at least one RTCM message selected from message 1005 or message 1006 included in the container message, and a 16-bit termination bit for indicating termination of a packet is optionally further added after the group CRC.

5. The method of any one of claims 1 to 4, wherein the plurality of RTCM messages are configured as the single container message,
wherein CRC information is removed from each of the RTCM messages, and
wherein single CRC information for the single container message is added to the single container message.

6. The method of any one of claims 1 to 5, wherein the single container message includes all data required for a single reference station without including partial data of the plurality of reference stations.

7. The method of claim 3 or 4, wherein the message 1006 includes at least one of (1) reference station number information indicating a unique ID of the reference station, or (2) information indicating a total number of bytes of RTCM data representing a total length of a group message including a header, a message, and the group CRC.

8. The method of any one of claims 1 to 7, wherein the rover UE acquires all data for each reference station based on the single container message and corrects position information.

9. An apparatus for transmitting Radio Technical Commission for Maritime Services (RTCM) messages corresponding to a plurality of reference stations to a rover user equipment (UE) through a broadcast network by a broadcast server, the apparatus comprising:
a memory and a processor,
wherein the processor is configured to:
collect a plurality of RTCM messages for each reference station and generate a single container message based on the plurality of RTCM messages;
configure a station identifier (ID) bit region and a reserved bit region in at least one RTCM message included in the single container message as a reference station number for identifying the reference station; and
configure a station identifier (ID) bit region and a reserved bit region in at least one RTCM message included in the single container message, wherein the reserved bit region is set as a reference station number for identifying the reference station; and
add a group cyclic redundancy check (CRC) calculated over all messages included in the container message at an end of the at least one RTCM message.

10. The apparatus of claim 9, wherein the processor is further configured to:
collect the plurality of RTCM messages for each reference station;
remove individual CRCs or CRC information included in each of the plurality of RTCM messages;
integrate the plurality of RTCM messages into the single container message; and
generate and add a single CRC or single CRC information for the container message.

11. The apparatus of claim 9 or 10, wherein a conventional 12-bit station ID bit region of at least one RTCM message selected from message 1005 or message 1006 included in the container message is set as length information indicating a total number of bytes of RTCM data included in the container message, and a conventional 10-bit reserved bit region is set as a reference station number for identifying the reference station.

12. The apparatus of any one of claims 9 to 11, wherein a 24-bit group CRC calculated over all messages included in the container message is added at an end of at least one RTCM message selected from message 1005 or message 1006 included in the container message, and a 16-bit termination bit for indicating termination of a packet is optionally further added after the group CRC.

13. The apparatus of any one of claims 9 to 12, wherein the plurality of RTCM messages are configured as the single container message,
wherein CRC information is removed from each of the RTCM messages, and
wherein single CRC information for the single container message is added to the single container message.

14. The apparatus of any one of claims 9 to 13, wherein the single container message includes all data required for a single reference station without including partial data of the plurality of reference stations.

15. The apparatus of claim 11 or 12, wherein the message 1006 includes at least one of (1) reference station number information indicating a unique ID of the reference station, or (2) information indicating a total number of bytes of RTCM data representing a total length of a group message including a header, a message, and the group CRC.
